# EUROPEAN PATENT APPLICATION

(11) **EP 4 470 428 A1**
(43) Date of publication of application: **04.12.2024**
(21) Application number: 24178546.8
(22) Date of filing: 28.05.2024
(51) Int. Cl.: A47J 31/44

(54) **COFFEE MACHINE**

(30) Priority: 01.06.2023 TR 202306380
(71) Applicant: BSH Hausgeräte GmbH, 81739 München (DE)
(72) Inventor: Özkayran, Seyhun, Istanbul (TR)

(57) **Abstract**

A coffee machine for preparing a coffee from the ground coffee beans, comprising: a housing (1), a boiler (2) arranged in the housing (1) for containing portion of the liquid, a supplying group (3) connected to the boiler (2) and comprising, a head unit (4) that is arranged on the housing (1), a filter unit (5) with a recess (6), a basket (17) and a handle (7), and arranged to be removable connected to the head unit (4) for forming a brewing chamber, and the basket (17) is being adapted to contain the ground coffee beans, and a stirring unit (8), comprising a stirrer (9) and a driving unit (10), and in that the driving unit (10) is fixed to the housing (1) and the stirrer (9) is adapted to be driven by the driving unit (10), preferably about an axis (A).

## Description

The present invention relates generally to coffee machines, such as espresso coffee machines, preferably with a portafilter.

The portafilter is a device that attaches onto the group head of an espresso making machine and that carries a quantity or dose of ground coffee in a compartment with a perforated floor that acts as a filter. The compartment is sometimes referred to as a basket and in some portafilters, the basket is interchangeable. Baskets of different capacity and flow characteristics may thereby be interchanged with, one another for optimizing the coffee brewing process in relation to the basket capacity and while ensuring an optimal working temperature of the head of the portafilter.

There is known for person to use a distribution method for espresso making which involves stirring the grounded coffee that in is the portafilter with using a set of fine needles fixed in the holder. The stirring action breaks up any clumps and evens out the density of coffee within the puck. Homogeneous coffee powder is better for preparing a real tasting espresso.

The document KR102174702B1 discloses a tool for uniformly distributing coffee capable of extracting the coffee well without waste of the coffee. The tool for uniformly distributing coffee of the present invention is a tool for uniformly distributing coffee to uniformly distribute the coffee in a container. The tool for uniformly distributing coffee comprises: a holder and a pin unit which is provided on a lower surface of the holder. The pin unit uniformly distributes the coffee by being rotated with the holder in a state of being inserted into the coffee through an upper opening unit of the portafilter.

This arrangement although is simple in design, yet is not convenient to use due to the need to rotate the tool in the fingers about vertical axis. Additionally, the tool can easily be lost or damaged due to its small size.

The objective of the present invention is further development of the prior art coffee machines, and more particular espresso coffee machines as well as to provide the device, which can ensure ergonomic usage of a tool for uniformly distributing coffee and protects against loss of the said tool.

In accordance with the present invention, there is provided an espresso coffee machine, comprising: a housing, a boiler arranged in the housing for containing portion of the liquid, a supplying group connected to the boiler and comprising, a head unit that is arranged on the housing, a filter unit with a recess, a basket and handle, and arranged to be removable connected to the head unit for forming an brewing chamber, and the basket is being adapted to contain the ground coffee beans. Furtherly the espresso coffee machine comprises a stirring unit that has a stirrer and a driving unit, and in that the driving unit is fixed to the housing and the stirrer is adapted to be driven by the driving unit, preferably about an axis A. The stirring unit can preferably also be arranged in or at the head unit.

Advantageously the espresso coffee machine is provided with the stirrer for uniformly distributing coffee, that is in the basket of the filter unit. The stirrer is fixed rotatable to the housing of the espresso coffee machine by using the driving unit, which can rotate the stirrer about the vertical axis. Thus, as the stirrer is not held in the hand by the user while stirring but is rotatable attached to the housing, it can be rotated by the user in a convenient manner for uniformly distributing coffee in the basket.

It is preferable the driving unit comprises an electric motor adapted for driving the stirrer. The positive effect is in that the electric motor ensures stable rotational speed of the stirrer causes better coffee distribution. In this regard, any electrically activateable means that provides sufficient movement for driving the stirrer shall preferably be seen herein as electric motor.

In the another preferred embodiment the coffee machine comprises a knob or a crank adapted for driving the stirrer, therefore the user can control and change directly the speed of rotation of the stirrer.

It is preferable the stirrer comprises a fixing part and a set of needles which are fixed at one end to the fixing part and protrude from the fixing part parallel to the axis A or are inclined to the axis A at an acute angle.

In the another preferred embodiment the coffee machine has the fixing part that comprises a collar extending periphery of the fixing part and which is adapted to be gripped with the fingers for rotating the stirrer. The positive effect is a simple design that reduces production costs and the ability to rotate the stirrer by the user without the use of additional parts.

In the drawings:
Fig. 1 is a perspective view of an espresso coffee machine in accordance with preferred embodiment of the present invention.
Fig. 2 is a perspective view of an espresso coffee machine in accordance with another preferred embodiment of the present invention.

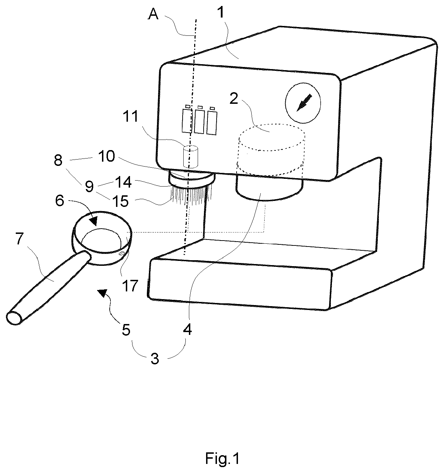

Reference is made to Fig. 1 which is a perspective view of an espresso coffee machine in accordance with preferred embodiment of the present invention, an espresso coffee machine comprises: a housing 1, a boiler 2 arranged in the housing 1 for containing portion of the liquid, a supplying group 3 connected to the boiler 2, and comprising: a head unit 4, that is arranged on the housing 1, a filter unit 5 with a recess 6, a basket 17, and a handle 7 and arranged to be removable connected to the head unit 4 for forming a brewing chamber. The basket 17 is being adapted to contain the ground coffee beans. Furtherly, the espresso coffee machine has a stirring unit 8, comprising a stirrer 9 and a driving unit 10. The driving unit 10 is fixed to the housing 1 and the stirrer 9 is adapted to be driven by the driving unit 10 about an axis A. The driving unit 10 comprises an electric motor 11 adapted for driving the stirrer 9. The stirrer 9 comprises a fixing part 14 and a set of needles 15 which are fixed at one end to the fixing part 14 and protrude from the fixing part 14 parallel to the axis A.

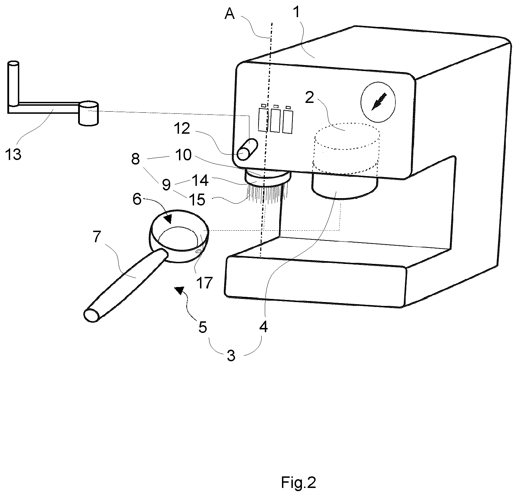

Reference is made to Fig. 2 which is a perspective view of an espresso coffee machine in accordance with another preferred embodiment of the present invention, an espresso coffee machine comprises: a housing 1, a boiler 2 arranged in the housing 1 for containing portion of the liquid, a supplying group 3 connected to the boiler 2, and comprising: a head unit 4, that is arranged on the housing 1, a filter unit 5 with a recess 6, a basket 17, and a handle 7 and arranged to be removable connected to the head unit 4 for forming a brewing chamber. The basket 17 is being adapted to contain the ground coffee beans. Furtherly, the espresso coffee machine has a stirring unit 8 comprising a stirrer 9 and a driving unit 10. The driving unit 10 is fixed to the housing 1 and the stirrer 9 is adapted to be driven by the driving unit 10 about an axis A. The driving unit 10 comprises a knob 12 or a crank 13 that can be fixed on the knob 12, adapted for driving the stirrer 9. The stirrer 9 comprises a fixing part 14 and a set of needles 15 which are fixed at one end to the fixing part 14 and protrude from the fixing part 14 parallel to the axis A.

### List of reference signs

- 1: housing
- 2: boiler
- 3: supplying group
- 4: head unit
- 5: filter unit
- 6: recess
- 7: handle
- 8: stirring unit
- 9: stirrer
- 10: driving unit
- 11: electric motor
- 12: knob
- 13: crank
- 14: fixing part
- 15: needle
- 16: collar
- 17: basket
- A: axis

## Claims

1. A coffee machine for preparing a coffee from the ground coffee beans, comprising:
- a housing (1),
- a boiler (2) arranged in the housing (1) for containing portion of the liquid,
- a supplying group (3) connected to the boiler (2) and comprising
- a head unit (4) that is arranged on the housing (1),
- a filter unit (5) with a recess (6), a basket (17), and a handle (7) and arranged to be removable connected to the head unit (4) for forming a brewing chamber,
- and the basket (17) is being adapted to contain the ground coffee beans, **characterized by** a stirring unit (8), comprising a stirrer (9) and a driving unit (10), and in that the driving unit (10) is fixed to the housing (1) and the stirrer (9) is adapted to be driven by the driving unit (10), preferably about an axis (A).

2. The coffee machine according to claim 1, **characterized in that** the driving unit (10) comprises an electric motor (11) adapted for driving the stirrer (9).

3. The coffee machine according to claim 2, **characterized in that** the driving unit (10) comprises a knob (12) or a crank (13) adapted for driving the stirrer (9).

4. The coffee machine according to any of the preceding claim, **characterized in that** the stirrer (9) comprises a fixing part (14) and a set of needles (15) which are fixed at one end to the fixing part (14) and protrude from the fixing part (14) parallel to the axis (A) or are inclined to the axis (A) at an acute angle.

5. The coffee machine according to claim 1 or 4, **characterized in that** the fixing part (14) comprises a collar (16) that extends periphery of the fixing part (14) and which is adapted to be gripped with the fingers for rotating the stirrer (9).
